Europäisches Patentamt

European Patent Office

Office européen des brevets

(11) Veröffentlichungsnummer: **0 261 326**
B1

# (12) EUROPÄISCHE PATENTSCHRIFT

(45) Veröffentlichungstag der Patentschrift:
09.05.90

(51) Int. Cl.⁵: **F16K 5/00**, E03D 1/30, F16K 5/06

(21) Anmeldenummer: 87109497.5

(22) Anmeldetag: 02.07.87

(54) Eckventil für Gebäudewasserleitungen.

(30) Priorität: 20.09.86 DE 3632080

(43) Veröffentlichungstag der Anmeldung:
30.03.88 Patentblatt 88/13

(45) Bekanntmachung des Hinweises auf die Patenterteilung:
09.05.90 Patentblatt 90/19

(84) Benannte Vertragsstaaten:
AT BE DE FR IT LU NL

(56) Entgegenhaltungen:
CH-A- 533 370
FR-A- 1 310 066
FR-A- 1 511 105
US-A- 1 530 163
US-A- 3 463 451
US-A- 4 271 866

Prospekte der Firma ALBERTONI und der Firma
NEOPERL, die vor dem Prioritätstag als vorbenutzt zu
gelten habe

(73) Patentinhaber: **Metallwerke Gebr. Seppelfricke GmbH &
Co., Haldenstrasse 27, D-4650 Gelsenkirchen(DE)**

(72) Der Erfinder hat auf seine Nennung verzichtet

(74) Vertreter: **Louis, Walter, Dipl.-Ing. et al, Patentanwälte
Dipl.-Ing. Walter Louis Dipl.-Ing. Günter Louis
Stubertal 3, D-4300 Essen 1(DE)**

## Beschreibung

Die Erfindung bezieht sich auf ein Eckventil für Gebäudewasserleitungen, gemäß dem Oberbegriff des Patentanspruchs 1.

Eckventile der vorgenannten Art werden an ihrem Gehäuseeintrittsende mit einer in der Gebäudewand liegenden Wasserleitung verschraubt und an ihrem gebräuchlicherweise rechtwinklig abstehenden Abgangsstutzen durch ein Anschlußröhrchen zum Beispiel mit der Auslaufarmatur eines Waschbeckens oder eines Klosettspülkastens verbunden. Als Absperrorgan haben die bekannten Eckventile einen konventionellen Ventilkegel, wobei das den Kegelschaft und die Betätigungsspindel führende sogenannte Ventiloberteil in das dem Gehäuseeintrittsende gegenüberliegende Gehäuseende eingeschraubt ist. Gemäß einem Prospekt der Firma Neoperl über Rückflußverhinderer sind Eckventile bekannt, bei denen das Gehäuseeintrittsende oder der Abgangsstutzen so ausgebildet sind, daß im Bedarfsfall ein Rückflußverhinderer in Form einer Einbaukartusche eingesetzt werden kann. Um bei solchen Eckventilen einen schadhaft gewordenen Rückflußverhinderer zu ersetzen, muß die Verschraubung des Eckventils mit der Gebäudewasserleitung respektive mit dem Anschlußröhrchen auseinandergenommen werden, wobei die Einbaumöglichkeit in das Gehäuseeintrittsende außerdem den Nachteil hat, daß der Rückflußverhinderer vor der Absperrstelle des Eckventils liegt. Die Einbaumöglichkeit in den Abgangsstutzen hat den zusätzlichen Nachteil, daß sie eine unüblich große und klobige Dimensionierung des Abgangsstutzens und dessen zum Befestigen des Anschlußröhrchens dienender Überwurfmutter erfordert. Aus einer Prospektdruckschrift der Firma Albertoni sind weiterhin Eckventile bekannt, bei denen das dem Gehäuseeintrittsende gegenüberliegende Gehäuseende durch eine Verschlußschraube verschlossen ist und in den Innenraum dieses Gehäuseendes ein zur Reinigung herausnehmbares hülsenförmiges Sieb eingeschoben ist, das an die Verschlußschraube angrenzt und vor der Einmündung des Abgangsstutzens liegt. Zusätzlich zu dem das Sieb enthaltenden Gehäuseende ist das Eckventilgehäuse mit einem winklig zur Seite abstehenden weiteren Gehäuseende ausgebildet, um darin das aus Ventilkegel und Betätigungsspindel bestehende konventionelle Ventiloberteil einschrauben zu können. Durch die erforderliche Ausbildung des Eckventils mit diesem abgewinkelten zusätzlichen Gehäuseende für die schrägsitzventilartige Aufnahme des Ventiloberteils wird die Herstellung des Ventilgehäuses schwieriger und teurer.

Die Erfindung hat zur Aufgabe, ein Eckventil zu schaffen, das wahlweise je nach Bedarf mit einem Sieb oder mit einem Rückflußverhinderer oder mit beidem ausgestattet und angewendet werden kann und bei dem sowohl das Sieb als auch der Rückflußverhinderer jederzeit bequem zum Reinigen oder Ersetzen aus dem Ventilgehäuse herausgenommen werden können, wobei der Nachteil vermieden werden soll, daß die vor Sieb und Rückflußverhinderer liegende Absperrstelle des Eckventils aus der als bekannt erwähnten Schrägsitzventilkegelanordnung besteht.

Diese Aufgabe wird gemäß der Erfindung durch die im kennzeichnenden Teil des Patentanspruchs 1 angegebenen Merkmale gelöst. Eine vorteilhafte Ausführungsform des erfindungsgemäßen Eckventils ist Gegenstand des Unteranspruchs 2.

Eine nähere Erläuterung des erfindungsgemäßen Eckventils und der vorteilhaften Ausführungsform folgt anhand des in der Zeichnung dargestellten Ausführungsbeispiels. Es zeigen

Figur 1 das Eckventil im Längsschnitt mit Sieb und Rückflußverhinderer,

Figur 2 das Eckventil im Längsschnitt nur mit Rückflußverhinderer,

Figur 3 das Eckventil im Längsschnitt nur mit Sieb.

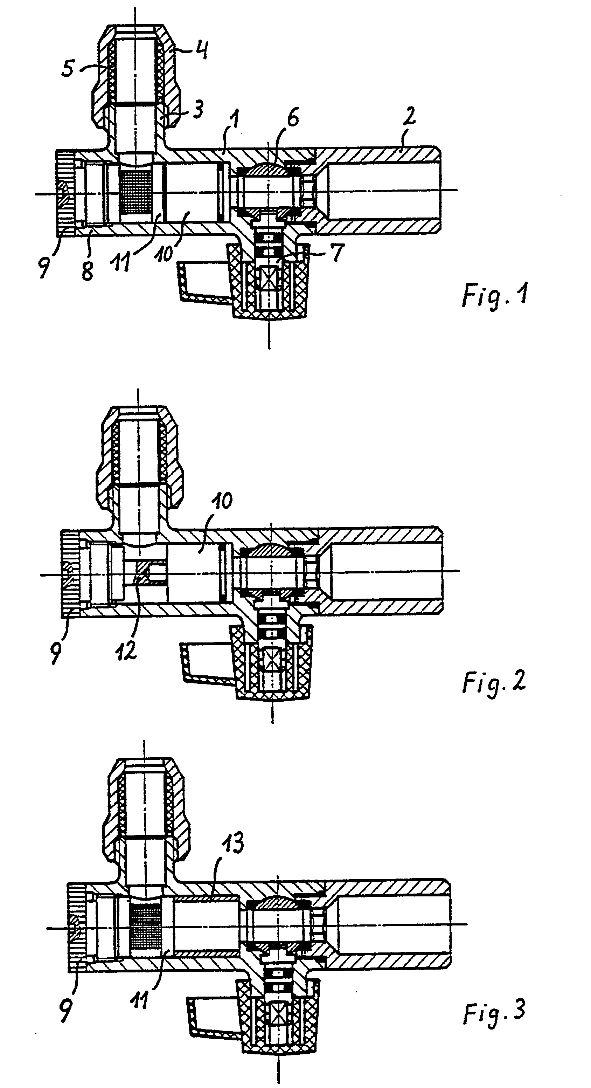

Das Eckventil besteht aus einem rohrförmigen Gehäuse 1 mit einem Gehäuseeintrittsende 2, das in üblicher Weise ein Außengewinde besitzt und mit einer Gebäudewasserleitung verschraubbar ist, und mit einem von dem Gehäuse 1 quer zu dessen Längsrichtung abstehenden Abgangsstutzen 3, der mit einer konventionellen Überwurfmutter 4 und Quetschdichtung 5 zum Anschließen eines zu einer Wasserzapfstelle weiterführenden Anschlußröhrchens ausgebildet ist. Als Absperrorgan enthält das Gebäude 1 eine verdrehbare Kugel 6, deren Betätigungsspindel 7 quer zur Längsrichtung des Gehäuses 1 aus diesem herausgeführt ist. Für den Einbau der Absperrkugel nebst Betätigungsspindel in das Gehäuse 1 wird das Gehäuseeintrittsende 2 von einem mit dem Gehäuse 1 verschraubten Gehäuseteil gebildet, wobei die Einschrauböffnung des Gehäuses 1 für das Gehäuseeintrittsende 2 groß genug bemessen ist, um die Absperrkugel 6 durch die Einschrauböffnung in das Gehäuse 1 einführen zu können. Das dem Gehäuseeintrittsende 2 gegenüberliegende Gehäuseende 8 ist durch eine Verschlußschraube 9 verschlossen. Der Gehäuseinnenraum zwischen der Absperrkugel 6 und der Verschlußschraube 9 ist als Einschubraum für einen Siebeinsatz und einen Rückflußverhinderereinsatz ausgebildet und enthält bei dem in Figur 1 dargestellten Anwendungsbeispiel des Eckventils in Reihe hintereinander einen handelsüblichen kartuschenförmigen Rückflußverhinderer 10, der in dem Einschubraum an die Absperrkugel 6 angrenzt, und ein Sieb 11, das an die Verschlußschraube 9 angrenzt und vor der Einmündung des Abgangsstutzens 3 liegt. Das Sieb 11 besteht zum Zwecke eines möglichst großen Durchflußquerschnitts in an sich bekannter Weise aus einer Hülse, in die das Wasser axial eintritt und durch deren Umfang das Wasser in den Abgangsstutzen 3 austritt. Vorteilhafterweise trägt die Verschlußschraube 9 einen Dichtungsring, der radial an einer glatten Zylinderfläche des Gehäuses 1 abdichtend anliegt, so daß die Verschlußschraube 9 bei Verschiebung des Dichtungsringes in Gehäuselängsrichtung so weit eingeschraubt werden kann, daß sie die Siebpatrone und die Rückflußverhindererpatrone in dem Gehäuseeinschubraum aneinanderdrückt und gegen axiales Verschieben sichert. Vorteilhafterweise ist die Siebpatrone durch eine druckknopfartig zusammensteckbare Verbindung mit der Innenseite der Verschlußschraube 9 verbunden, so daß beim Abnehmen der Verschlußschraube 9 gleichzeitig die Siebpatrone 11 aus dem Gehäuse 1 herausgezogen wird. Vorteilhafterweise besitzt die Verschlußschraube 9 auf ihrer Innenseite einen Zapfen 12, der so weit durch die Siebpatrone hindurchragt und nahe an die Rückflußverhindererpatrone heranreicht, daß bei Anwendung des Eckventils nur mit Rückflußverhinderer 10 gemäß der Figur 2 die Siebpatrone 11 fortgelassen werden kann und die Rückflußverhindererpatrone 10 durch den Zapfen 12 axial im Gehäuse 1 fixiert wird. Für eine Anwendung des Eckventils nur mit Sieb 11 gemäß der Figur 3 braucht die Rückflußverhindererpatrone 10 nur durch eine einfache, gleich lange Hülse 13 ersetzt zu werden.

**Patentansprüche**

1. Eckventil für Gebäudewasserleitungen, bestehend aus einem rohrförmigen Gehäuse (1) mit Wassereintritt an einem Gehäuseende (2) und Wasseraustritt an einem von dem Gehäuse (1) quer zu dessen Längsrichtung abstehenden Abgangsstutzen (3) und mit einem zwischen Gehäuseeintrittsende (2) und Abgangsstutzen (3) angeordneten Absperrorgan (6) mit Betätigungsspindel (7), wobei das dem Gehäuseeintrittsende (2) gegenüberliegende Gehäuseende (8) durch eine Verschlußschraube (9) verschlossen ist und der Gehäuseinnenraum zwischen Absperrorgan (6) und Verschlußschraube (9) als Einschubraum für ein an die Verschlußschraube (7) angrenzendes, vor der Einmündung des Abgangsstutzens (3) liegendes hülsenförmiges Sieb (11) ausgebildet ist, dadurch gekennzeichnet, daß das Gehäuse (1) eine verdrehbare Kugel (6) als Absperrorgan enthält, deren Betätigungsspindel (7) rechtwinklig zur Längsrichtung des Gehäuses (1) aus diesem herausgeführt ist, und daß der Einschubraum zusätzlich mit einem zwischen dem Sieb (11) und der Absperrkugel (6) liegenden Abschnitt für die Aufnahme eines an die Absperrkugel (6) angrenzenden Rückflußverhinderers (10) augebildet ist.

2. Eckventil nach Anspruch 1, dadurch gekennzeichnet, daß ein Rückflußverhinderer (10) und ein Sieb (11) in Reihe hintereinander liegend die Länge des Gehäuseeinschubraumes ausfüllen und daß die Verschlußschraube (9) einen durch das Sieb bis zum Rückflußverhinderer hindurchragenden Zapfen (12) aufweist, wobei vorzugsweise die Verschlußschraube (9) an dem Gehäuse (1) mit einem in dessen Längsrichtung verschiebbaren Dichtungsring abgedichtet ist.

**Claims**

1. Corner valve for water conduits in buildings, consisting of a pipe-shaped housing (1) with the water feed at one end (2) of the housing and the water outlet through a connecting piece (3) transverse to the longitudinal direction of the housing (1) and with a shut-off device (6) with an operating spindle (7) placed between the housing inlet end (2) and the connecting piece (3), whereby the housing end (8) opposite the inlet end (2) is closed by means of a screw plug (9), and the housing interior space between the shut-off device (6) and the screw plug (9) is designed as insertion space for a sleeve-type filter (11) which is situated next to the screw plug (7), before the junction of the connecting piece (3), characterized in that the housing (1) contains a turnable ball (6) as the shut-off device, whose operating spindle (7) is at right-angles to the housing (1), and that the insertion space is additionally provided with a section between the filter (11) and the shut-off ball (6) for the insertion, next to the shut-off ball (6), of a check valve (10).

2. Corner valve according to claim 1, characterized in that a check valve (10) is followed by a filter (11) in the line and fill out the insertion space, and that the screw plug (9) has a spigot (12) which goes through the filter as far as the check valve, whereby the screw plug is preferably to be sealed to the housing (1) with a sealing ring moveable in the longitudinal direction of the housing.

**Revendications**

1. Soupape d'équerre pour conduites d'eau pour bâtiments, comprenant une cage tubulaire (1) avec arrivée d'eau à une extrémité de la cage (2) et départ d'eau à une tubulure (3) sortant de la cage (1) en sens transversal et avec un organe d'arrêt (6) et une tige de manœuvre (7) disposés entre l'extrémité de la cage (2) et la tubulure de sortie (3), l'extrémité de la cage (8) située du côté opposé à l'extrémité d'arrivée d'eau (2) étant obturée par un bouchon de fermeture à vis (9) et l'intérieur de la cage entre l'organe d'arrêt (6) et le bouchon de fermeture à vis (9) étant conçu en tant que zone d'insertion pour un tamis (11) en forme de gaine situé à proximité du bouchon de fermeture à vis (7) en amont de l'embouchure de la tubulure de sortie (3), caractérisée en ce que la cage (1) renferme une sphère tournante (6) en tant qu'organe d'arrêt dont la tige de manœuvre (7) sort de la cage (1) en formant un angle droit avec son axe longitudinal et que la zone d'insertion est conçue en plus avec une section située entre le tamis (11) et l'organe d'arrêt (6) pour la mise en place d'un clapet de nonretour (10) à proximité de l'organe d'arrêt (6).

2. Soupape d'équerre selon la revendication 1, caractérisée en ce qu'un clapet anti-retour (10) et un tamis (11) disposés en ligne l'un derrière l'autre remplissent la zone d'insertion sur sa longueur et que le bouchon de fermeture à vis (9) indique un pivot (12) passant à travers le tamis jusqu'au clapet de non-retour, le bouchon de fermeture à vis (9) étant étanché sur la cage (1) de préférence par une bague de joint déplaçable en sens longitudinal de la cage (1).

Fig. 1

Fig. 2

Fig. 3